# NEW EUROPEAN PATENT SPECIFICATION

(11) **EP 1 101 237 B2**
(45) Date of publication and mention of the opposition decision: **16.08.2017**
(45) Mention of the grant of the patent: 25.08.2004
(21) Application number: 00935489.5
(22) Date of filing: 01.06.2000
(51) Int. Cl.: H01J 7/18

(54) **COMPOSITE MATERIALS CAPABLE OF HYDROGEN SORPTION INDEPENDENTLY FROM ACTIVATING TREATMENTS AND METHODS FOR THE PRODUCTION THEREOF**
SORPTIONSFÄHIGE VERBUNDWERKSTOFFE DIE UNABHÄNGIG SIND VON AKTIVIERUNGSBEHANDLUNGEN UND VERFAHREN ZUR HERSTELLUNG
MATERIAUX COMPOSITES PERMETTANT LA SORPTION D'HYDROGÈNE INDÉPENDAMMENT DE TRAITEMENTS D'ACTIVATION ET LEURS PROCÉDÉS DE PRODUCTION

(30) Priority: 02.06.1999 IT MI991241; 09.03.2000 IT MI000475
(43) Date of publication of application: 23.05.2001
(73) Proprietor: SAES GETTERS S.p.A., 20020 Lainate (Milano) (IT)
(72) Inventor: DELLA PORTA, Paolo, I-22060 Carimate (IT); BOFFITO, Claudio, I-20017 Rho (IT); TOIA, Luca, I-21040 Carnago (IT)
(74) Representative: Montelatici, Linda Anna
(86) International application number: PCT/IT2000/000225
(87) International publication number: WO 2000/075950

(56) References cited:
- EP-A- 0 291 123
- EP-A1- 0 251 384
- WO-A-93/25843
- WO-A1-90/02406
- DE-A1- 2 448 738
- DE-A1- 4 025 282
- DE-B- 1 149 962
- DE-C1- 3 234 671
- FR-A- 2 760 089
- GB-A- 467 001
- GB-A- 1 339 524
- US-A- 3 350 846
- US-A- 5 451 474
- PATENT ABSTRACTS OF JAPAN vol. 016, no. 548 (C-1005), 18 November 1992 (1992-11-18) & JP 04 209710 A (JAPAN PIONICS CO LTD), 31 July 1992 (1992-07-31)
- DATABASE WPI Week 197741 Derwent Publications Ltd., London, GB; AN 1977-73374Y XP002146505 "LONG LIFE METAL VAPOUR DISCHARGE LAMP HAVING HYDROGEN GETTER OF ZIRCONIUM (ALLOY) COATED WITH PALLADIUM" & JP 52 103879 A (TOKYO SHIBAURA ELECTRIC CO), 31 August 1977 (1977-08-31)
- DATABASE WPI Week 198602 Derwent Publications Ltd., London, GB; AN 1986-012247 XP002146506 PUSTOVOIT ET AL.: "VACUUM TECHNOLOGY NON-SPRAYED GAS-ABSORBER-HAS ACTIVE MATERIAL IN PROTECTIVE HYDROGEN-PERMEABLE SHELLIN FORM OF THIN FILM OF PALLADIUM" & SU 1 141 920 A (PUSTOVOIT Y U M ), 1986 cited in the application
- LAW H.H. ET AL: 'A novel plating process for microencapsulating metal hydrides' JOURNAL ELECTROCHEMICAL SOCIETY vol. 143, no. 8, August 1996, pages 2596 - 2601
- V.S.Sorokendya, R.U. Bondar, Dnepropetr. Khim.-Tekhnol., Dnepropetrovks, USSR, Elektrokhimya 25(11), 1553-5, ISSN: 0424-8570 CAPLUS Abstract in English, CAN: 112:27196, AN: 1990:27196(1989)
- LEE S.-Y. ET AL: 'Preparation of sol-gel driven alumina membrane modified by soaking and vapor-deposition method' JOURNAL OF MEMBRANE SCIENCE vol. 108, no. 1-2, 15 December 1995, pages 97 - 105

## Description

The present invention relates to composite materials capable of sorbing only hydrogen independently from activating treatments and to composite materials capable of sorbing hydrogen independently from activating treatments and gases other than hydrogen as a result of said treatments; the invention also refers to methods for the production of said materials.

In technological advanced applications, gas sorption is generally carried out by means of non-evaporable getter materials (also known as NEG materials), which comprise metals such as zirconium or titanium or alloys based on these metals with one or more other elements selected among transition metals and aluminum. These materials are largely used in the field of vacuum maintenance and gas purification. The main uses of these metals comprise vacuum maintenance for thermal insulation, for instance inside evacuated interspaces of thermal bottles (thermos), of Dewars, of the pipes for oil transport in arctic regions or of the submarine pipes connecting off-shore extraction platforms to the continent; a particular application is in the drilling pipes used for oil extraction, wherein it is necessary that the pipe through which the oil is brought up is thermally insulated in order to prevent an excessive cooling of the fluid, which would cause the solidification of the heavy components with resulting increase of the total viscosity thereof until the pipe is possibly blocked. Other very important applications of the NEG materials are in the removal of gases such as hydrogen, oxygen, water, carbon oxides and sometimes nitrogen from the noble gases, which are used in semiconductor industries or as lamp filling atmosphere.

NEG materials are subject matter of several patents. Patent US 3.203.901 describes Zr-Al alloys, and particularly the alloy whose weight percent composition is Zr 84% - Al 16%, produced and sold by the applicant under the name St 101®; patent US 4.071.335 describes Zr-Ni alloys, and particularly the alloy whose weight composition is Zr 75,7% - Ni 24,3%, produced and sold by the applicant under the name St 199™; patent US 4.306.887 describes Zr-Fe alloys, and particularly the alloy whose weight composition is Zr 76,6% - Fe 23,4%, produced and sold by the applicant under the name St 198™; patent US 4.312.669 describes Zr-V-Fe alloys, and particularly the alloy whose weight percent composition is Zr 70%-V 24,6%-Fe 5,4%, produced and sold by the applicant under the name St 707® ; patent US 4.668.424 describes alloys having composition Zr-Ni-A-M, wherein A indicates one or more elements of the Rare Earths, and M indicates one or more elements selected among cobalt, copper, iron, aluminum, tin, titanium, silicon; patent application EP-A-869.195 describes alloys having composition Zr-Co-A, wherein A is an element selected among yttrium, lanthanum, Rare Earths or mixtures thereof, and particularly an alloy whose weight percent composition is Zr 80,8% - Co 14,2% - A 5%, produced and sold by the applicant under the name St 787™; finally, patent US 4.457.891 describes Ti-Ni and Ti-V-Mn alloys.

The sorption of the above indicated gases by the NEG materials occurs in two steps. The first step is the superficial chemisorption of the gaseous species, generally accompanied by dissociation of the species in the constituent atoms. Hydrogen atoms spread inside the material, even at low temperatures, forming at first solid solutions; with the increase of the hydrogen concentration, the formation of hydrides occurs, such as ZrH₂. Therefore, capacity of hydrogen sorption is high even at low temperature. On the contrary, the sorption of elements such as oxygen, carbon and nitrogen has a different behaviour; at relatively low temperatures (generally lower than about 300-500°C according to the type of the material) only superficial chemisorption occurs, with formation of layers comprising compounds of the oxide, carbide or nitride type. At temperatures higher than the indicated ones the oxygen, nitrogen and carbon atoms diffuse in the material, thus regenerating a clean and gas-sorption capable surface. The effect of surface cleaning can be obtained by constantly maintaining the NEG material at a sufficiently high temperature, or by maintaining it at low temperature and bringing it periodically to the above indicated temperatures, with the so-defined activating treatments, to be carried out at regular intervals or when a loss of the sorption features is observed. However, there are many applications of the NEG materials wherein the working temperature is the room temperature (or even a lower one) and also the activating treatments are practically impossible; among these, the evacuated interspaces of the thermos or of the pipes for oil extraction or transport, or fluorescent lamps. Another important application of this kind is in batteries, both of the rechargeable kind such as e.g. the Ni-MH batteries, and of the non rechargeable kind, such as conventional alkaline batteries, that, under certain operating conditions may give rise to hydrogen release with swelling of the case and risk of explosion.

In these conditions the sorption of relatively small quantities of oxygen, nitrogen or carbon produces a passivating layer on the surface of the NEG material which prevents further gas sorption, thus reducing the material capacity to a fraction of the theoretical one. Further, the passivating layer blocks hydrogen sorption which, as already explained, would occur to a high extent even at room temperature.

The presence of hydrogen is particularly harmful in many devices wherein NEG materials are used. In the case of applications for thermal insulation, this is due to hydrogen being, among gases, the best thermal conductor, and therefore its presence in evacuated interspaces, even in small quantities, notably worsens the thermal insulating property thereof. In lamps, the presence of this gas in the gaseous filling mixture modifies the discharge conditions, thus preventing the correct functioning of the lamp itself and generally shortening the life thereof. Further, the presence of hydrogen is even more troublesome in the pipes for oil extraction. In this application, acid solutions containing for instance hydrochloric acid, nitric acid, hydrofluoric acid or mixtures thereof are passed through the internal pipe in order to favor the disintegration of rocks wherefrom oil is extracted. However, the acid can cause corrosion of the pipes, with formation of microperforations and contemporaneous generation of large quantities of hydrogen; the so generated hydrogen may easily pass through the microperforations and penetrate in the interspace, with serious consequences on the thermal insulation properties

The improvement of the hydrogen removal features by getter materials is the subject matter of the international patent application published with the number WO 98/37958 and of patent SU-A-1.141.920, which describe coating these materials with palladium. According to these documents, the coating is carried out by cathodic deposition (better known in the field by the English term "sputtering") thus obtaining a continuous hydrogen-permeable film of noble metal on the surface of the NEG material. In these conditions the getter material is in contact with the chamber which is to be kept evacuated or with the gas to be purified only through said film. However, the getter systems described in these documents can be obtained only in a planar configuration, which is not suitable for all the possible applications of the getter materials; besides, the gas sorption capacity (that is, the maximum gas quantity which can be sorbed) of these systems is reduced, because of the poor quantity of non-evaporable getter material in the planar deposits; finally, the systems according to the state of the art are totally selective towards hydrogen sorption, and cannot carry out the removal of other gaseous species.

Patent EP-B-291.123 describes the use in lamps of getter materials of composition Zr-Pd-O, wherein palladium is present in a molar concentration between 0,4 and 15% and the molar ratio between oxygen and zirconium is within the range 0,02 ∼ 1.

Object of the present invention is providing composite materials capable of hydrogen sorption independently from activation treatments.

The object is achieved by means of composite materials as set out in claim 1.

The invention relates to composite materials capable of sorbing hydrogen independently from activating treatments, as well as sorbing gases other than hydrogen as a result of said treatments, formed of non-evaporable getter materials whose surface is partially coated with a deposit consisting of one or more species among metallic palladium, palladium oxide, palladium-silver alloys containing up to 30% of silver by atoms and compounds of palladium and the getter metal or one or more metals of the getter alloy, with a coating degree between about 10 and 90%.

The invention will be described in the following with reference to the drawings wherein:
- figure 1 shows in section a powder grain of a composite material with complete palladium coating;
- figure 2 shows a powder grain of a composite material of the invention with partial palladium coating;
- figure 3 shows the operation of coating the powders of a NEG material with palladium according to a possible preparation technique;
- figure 4 shows powders of material of the invention obtained according to the technique shown in figure 3.

For the purposes of the invention the deposit is preferably carried out with metal palladium or palladium-silver alloys containing up to 30% of silver by atoms. These deposits are subjected to the oxidation, at least partial, by the oxygen which is possibly present; besides, in consequence of the thermal treatments to which the materials of the invention may be subjected, a deposit of metallic palladium or palladium-silver alloy can interact with one or more metals of the underlying getter material (in the case that the getter material is a metal or an alloy, respectively), with formation of alloys or intermetallic compounds, which can in turn be oxidized at least partially. In the rest of the text, unless differently specified, all these species will be referred to as palladium or compounds thereof.

The NEG materials which can be used in the invention are all the known ones, and generally comprise metals such as Zr, Ti, Nb, Ta, V, alloys of these metals or among these and one or more other elements, selected among Cr, Mn, Fe, Co, Ni, Al, Y, La and Rare Earths. For instance, it is possible to use the binary alloys Ti-V, Zr-V, Zr-Al, Zr-Fe and Zr-Ni; ternary alloys Ti-V-Mn, Zr-Mn-Fe and Zr-V-Fe; multicomponent alloys Zr-Ni-A-M or Zr-Co-A, wherein A is an element selected among yttrium, lanthanum, Rare Earths or mixtures thereof and M indicates an element selected among cobalt, copper, iron, aluminum, tin, titanium, silicon or mixtures thereof; finally, it is possible to use mixtures between the previously mentioned metals and alloys.

As said, according to the invention the coating degree is between 10 and 90% of the surface of the NEG material. If in the intended application for the composite material, hydrogen is the only gas whose sorption must be guaranteed, the coating degree will be preferably of 100%; if, on the contrary, the possibility of removing gases other than hydrogen has to be guaranteed, the coating degree will be between 10 and 90%. For coating values lower than 10%, when the exposed surface of the NEG material is passivated, the hydrogen sorption velocity is be excessively reduced. On the contrary, at coating values higher than 90%, the capacity of sorbing gases other than hydrogen is excessively reduced when, after an activation treatment, the NEG material surface is clean. Preferably, in this second possibility said coating degree is between about 25% and 75% of the surface of the material.

The deposit thickness is lower than about 5 µm: higher thickness values involve the use of a larger quantity of palladium (very expensive element), slow down hydrogen sorption and do not offer particular advantages with respect to low thickness values.

The composite materials of the invention are used in the form of powders, wherein every particle is a grain of NEG material with partial coating of palladium or compounds thereof. The powders preferably have a particle size lower than about 500 µm; even more preferably, the particle size of the powders is between about 20 and 125 µm.

These powders may be pressed and sintered in order to form pellets of the composite material of the invention only; or be inserted in an upperly open container, for instance through compression by suitable punches; or again be deposited on a generally planar support, with techniques such as the cold rolling or the screen-printing technique. Formation of pellets, use of containers and cold lamination are well known in the field of powder metallurgy, whereas the details of the screen-printingtechnique applied to the getter materials are described in patent US 5.882.727 in the name of the applicant.

In case of deposits of metallic palladium, palladium oxide or compounds between palladium and metals of the getter material, the composite materials of the invention may be obtained by using various techniques.

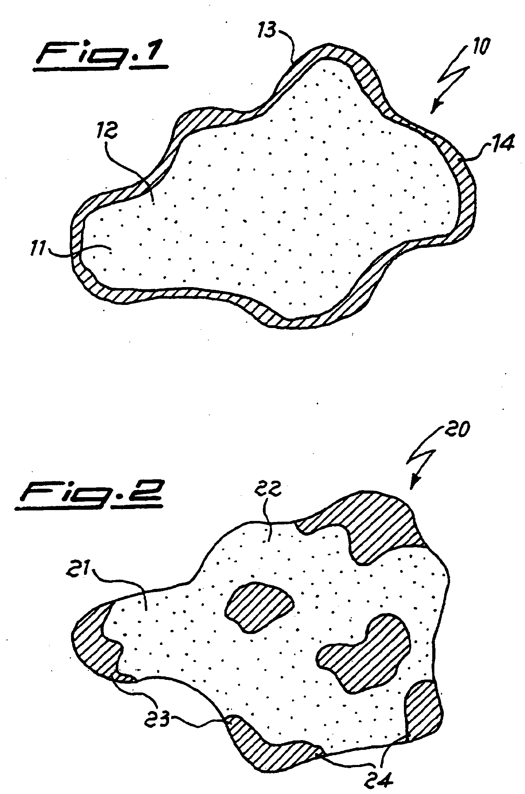

For obtaining a coating grade up to 100%, the technique of the liquid phase impregnation may be used. According to this technique, the powders of the NEG material are dipped, generally under continuous stirring, in a solution containing a palladium compound maintained at a temperature between about 25 and 50°C. The solvent may be water, an alcohol or a hydroalcoholic mixture. As palladium compounds, for instance the nitrate, Pd(NO₃)₂, the acetate, Pd(OOC-CH₃)₂, or salts of the tetraminic palladium complex, [Pd(NH₃)_{4]}²⁺, can be used. The solution is subsequently dried through evaporation of the solvent and the resulting dry powder is treated at 500°C under vacuum for a period between 5 and 45 minutes. By this treatment the palladium salt which is present on the surface of the grains of NEG metal or alloy is converted into palladium oxide (in the case of the nitrate or acetate) or into metal palladium in the case of the salts of the tetraminic complex. In the case of obtainment of the oxide, this can be partially reduced in situ to metallic palladium for the presence of the NEG material, which has a strong affinity for oxygen. A grain 10 of the composite material of the invention, formed of a particle 11 of NEG material 12 completely coated by a deposit 13 of palladium or compounds thereof 14, is shown in cross-section in figure 1. Figure 2 shows a grain 20 of composite material of the invention with partial palladium coverage; the grain is formed of a particle 21 of powder of NEG material 22 on which deposits 23 of palladium or compounds thereof 24 are present.

A degree of partial or total coating can also be obtained by using the technique of chemical deposition from the vapor phase, better known by the English definition "Chemical Vapor Definition" or with the acronym CVD. This technique consists in evaporating, possibly at high temperature and/or low pressure, a volatile or volatilizable precursor of the element to be deposited. The evaporation is carried out in a chamber wherein the substrate is present (in this case the powders of NEG material), on which the precursor vapors are condensed. After the deposition of the precursor, this is decomposed by thermal treatment, again giving rise to a coating with metallic palladium, palladium oxide, or a palladium compound with the metals of the NEG starting material. For the use in the CVD technique organometallic palladium compounds are generally used.

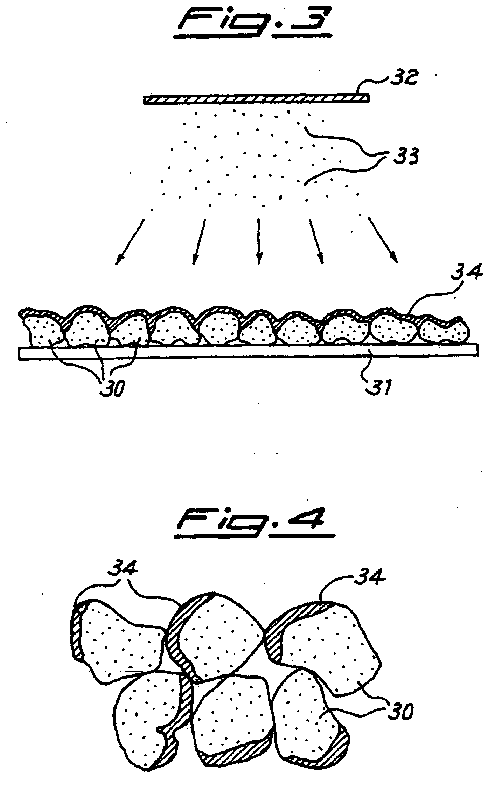

If a coating degree lower than 100% is desired, further to the above described techniques it is possible to use the evaporation or sputtering techniques. According to these techniques, the NEG material is positioned inside a chamber maintained under vacuum, in the form of a thin powder bed on a sample-holder; as the palladium source, it is possible to use a metal wire heated by current passage in the case of the evaporation, or the so-called "target" in the case of the sputtering. The palladium which is evaporated or from cathodic deposition (sputtering) is deposited only on the portion of the grains of NEG material which is exposed to the wire. The use of these techniques is shown in figure 3, wherein 30 indicates the grains of NEG material on a sample-holder 31; 32 represents the palladium source (indifferently the wire in the case of evaporation or the target in the case of sputtering), 33 are the palladium atoms emitted by the source 32 and 34 represents the film of palladium deposited on the powders of NEG material. In figure 4 the loose powders of the composite material of the invention are represented, as obtained according to these techniques (in figures 3 and 4 equal reference numbers correspond to equal elements). If increasing the coating degree is desired, it is also possible to maintain the powders under stirring, for example by vibration of the sample-holder, so that the orientation thereof is changed during the palladium deposition.

In the case of the coating with palladium-silver alloys, resorting to the sputtering technique, using a target of the same alloy as the source, is preferable.

By using the technique of impregnation from liquid phase or CVD, obtaining the only partial coating of the NEG powders is due to the use of limited quantities of the precursor; these quantities can be theoretically estimated, but are preferably obtained by trial tests. If instead use of evaporation or sputtering techniques is made, obtaining a partial coating is due to geometrical factors.

Independently from the technique used for the coating, the powders of NEG material may be precharged with hydrogen before the operation of deposition of palladium (or of the precursor thereof). The hydrogen sorbed by the getter through this operation is then released during a thermal treatment subsequent to palladium deposition, which can be a treatment already foreseen by the process, as in the techniques of impregnation or deposition through CVD, or additional in the case of the techniques of evaporation or sputtering. The re-emission of hydrogen carries out a cleaning of the surfaces of the NEG material, with following improvement of the sorption properties of gases other than hydrogen by the material. For the details relevant to the treatments of hydrogenation or dehydrogenation of the NEG materials, patents US 4.839.085 and EP-B-716.772 are referred to.

The invention will be further illustrated in the following examples. These non-limiting examples illustrate some embodiments which are intended to teach to those skilled in the art how to put the invention into practice and to represent the best way for carrying out the invention.

### EXAMPLE 1

This test exemplifies the preparation of a composite material of the invention.

10 grams of St 707® alloy having a particle size between 20 and 128 µm are dipped in an aqueous solution of Pd(NO₃)₂, containing 0,43g of the salt, with a ratio between palladium and St 707® alloy of 2% by weight. The water is evaporated by heating under mild pumping and stirring by using a rotating evaporator (Rotavapor). The dry residue is subjected to a thermal treatment at 500°C under vacuum. The thus prepared material represents sample 1.

### EXAMPLE 2

This test exemplifies the functionality of a composite material of the invention.

1 gram of sample 1 is activated by treatment at 500°C for 30 minutes, exposed to CO at a pressure of 1,3x10⁻³ mbar for 5 minutes and subsequently to hydrogen at a pressure of 2,7 x 10⁻³ mbar. The sorption velocity is about 60 ml of hydrogen per second.

### EXAMPLE 3 (COMPARATIVE)

The test of example 2 is carried out again on 1 gram of alloy St 707® not coated with palladium. The sorption velocity is about 20 ml of hydrogen per second.

From the comparison of tests 2 and 3 it may be inferred that the material of the invention, formed of a known NEG material partially coated with palladium, has a hydrogen sorption velocity which is about three times that of the same known NEG material without said coating.

Therefore, the invention allows obtaining composite materials particularly useful in hydrogen sorption. Further, unlike what is described in some documents of the prior art, the invention allows obtaining materials capable of sorbing also gases other than hydrogen, but wherein the sorption of the latter gas is not influenced by the sorption of other gases. Finally, the invention extends the possibility of forming palladium deposits even on surfaces which are not planar or essentially planar: this enables achievement of devices for the sorption of hydrogen of various geometries and suitable for every specific application, and particularly devices wherein the quantity of NEG material is high, so that an increased hydrogen sorption capacity is obtained with respect to similar known devices.

## Claims

1. Composite materials (10; 20) capable of sorbing hydrogen independently from activation treatments, formed of non-evaporable getter material wherein the getter material is in the form of powders (12; 22) whose particle surface has a coating degree between 10% and 90% of a deposit (13; 23) formed of one or more species among metallic palladium, palladium oxide, palladium-silver alloys containing up to 30% by atoms of silver and compounds between palladium and one or more metals of the getter material and wherein the non-evaporable getter material is selected among:
- Zr, Ti, Nb, Ta, V metals;
- alloys between Zr and/or Ti and one or more other elements selected among Cr, Mn, Fe, Co, Ni, Al, Cu, Sn, Si, Y, La and Rare Earths;
- mixtures of said metals and said alloys.

2. Composite materials according to claim 1, wherein the non-evaporable getter material is selected among Ti-V; Zr-V; Zr-Al; Zr-Fe; Zr-Ni; Ti-V-Mn; Zr-Mn-Fe; Zr-V-Fe; Zr-Ni-A-M or Zr-Co-A alloys, wherein A Indicates an element selected among yttrium, lanthanum, Rare Earths or mixtures thereof and M indicates an element selected among cobalt, copper, iron, aluminium, tin, titanium, silicon or mixtures thereof.

3. Composite materials according to claim 1, wherein the coating degree is between about 25% and 75% of the non-evaporable getter material surface.

4. Composite materials according to claims 1, wherein the thickness of said deposit is lower than about 5 µm.

5. Composite materials according to claims 1, wherein the powder particles have a size lower than about 500 µm.

6. Composite materials according to claim 5, wherein the particle size of the powders is between about 20 and 125 µm.

7. Devices comprising composite materials (10; 20) of claim 1.

8. A device according to claim 7, being in the form of a container for thermal insulation with evacuated interspace.

9. A device according to claim 7, being in the form of a thermally insulated pipe with evacuated interspace.

10. A device according to claim 7, being in the form of a battery of the rechargeable or non-rechargeable kind.

## Patentansprüche

1. Verbundmaterialien (10; 20), geeignet zur Sorption von Wasserstoff unabhängig von Aktivierungsbehandlungen, gebildet aus nicht flüchtigem Getter-Material, worin das Getter-Material in Form von Pulver vorliegt (12; 22), dessen Teilchenoberfläche mit einem Beschichtungsgrad zwischen 10% und 90% von einer Abscheidung (13; 23) bedeckt ist, die aus einem oder mehreren Vertretern aus metallischem Palladium, Palladiumoxid, bis zu 30 % Silberatome enthaltende Palladiumsilberlegierungen und Verbindungen aus Palladium und einem oder mehreren Metallen des Getter-Materials gebildet ist, worin das nicht flüchtige Getter-Material ausgewählt ist aus:
- Zr, Ti, Nb, Ta, V-Metallen,
- Legierungen aus Zr und/oder Ti und einem oder mehreren anderen Elementen, ausgewählt aus Cr, Mn, Fe, Co, Ni, Al, Cu, Sn, Si, Y, La und seltenen Erden,
- Gemischen dieser Metalle und dieser Legierungen.

2. Verbundmaterialien nach Anspruch 1, worin das nicht flüchtige Getter-Material ausgewählt ist aus Ti-V; Zr-V; Zr-Al; Zr-Fe; Zr-Ni; Ti-V-Mn; Zr-Mn-Fe; Zr-V-Fe; Zr-Ni-A-M oder Zr-Co-A-Legierungen, wobei A ein Element bezeichnet, das aus Yttrium, Lanthan, seltenen Erden oder Gemischen hiervon ausgewählt ist und M ein Element bezeichnet, das aus Kobalt, Kupfer, Eisen, Aluminium, Zinn, Titan, Silicium oder Gemischen hiervon ausgewählt ist.

3. Verbundmaterialien nach Anspruch 1, worin der Beschichtungsgrad zwischen etwa 25 % und 75 % der Oberfläche des nicht flüchtigen Getter-Materials liegt.

4. Verbundmaterialien nach Anspruch 1, worin die Dicke der Abscheidung weniger als etwa 5 µm beträgt.

5. Verbundmaterialien nach Anspruch 1, worin die Pulverpartikel eine Größe von kleiner etwa 500 µm haben.

6. Verbundmaterialien nach Anspruch 5, worin die Partikelgröße des Pulvers zwischen etwa 20 bis 125 µm liegt.

7. Vorrichtungen, enthaltend die Verbundmaterialien (10; 20) nach Anspruch 1.

8. Vorrichtung nach Anspruch 7, in Form eines Behälters zur thermischen Isolierung mit evakuiertem Zwischenraum.

9. Vorrichtung nach Anspruch 7, in Form eines thermisch isolierten Rohrs mit evakuiertem Zwischenraum.

10. Vorrichtung nach Anspruch 7 in Form einer wiederaufladbaren oder nicht wiederaufladbaren Batterie.

## Revendications

1. Matériaux composites (10 ; 20) capables de réaliser une sorption de l'hydrogène indépendamment de traitements d'activation, formés d'un matériau sorbeur non évaporable, dans lesquels le matériau sorbeur est sous la forme de poudres (12 ; 22) dont la surface des particules a un degré de revêtement compris entre 10 % et 90 % d'un dépôt (13 ; 23) formé d'une ou plusieurs espèces parmi le palladium métallique, l'oxyde de palladium, les alliages de palladium et d'argent contenant jusqu'à 30 % atomiques d'argent, et les composés entre le palladium et un ou plusieurs métaux du matériau sorbeur, et dans lesquels le matériau sorbeur non évaporable est choisi parmi :
- les métaux Zr, Ti, Nb, Ta, V ;
- les alliages entre Zr et/ou Ti et un ou plusieurs autres éléments choisis parmi Cr, Mn, Fe, Co, Ni, Al, Cu, Sn, Si, Y, La et les terres rares ;
- les mélanges desdits métaux et desdits alliages.

2. Matériaux composites selon la revendication 1, dans lesquels le matériau sorbeur non évaporable est choisi parmi les alliages Ti-V ; Zr-V ; Zr-Al ; Zr-Fe ; Zr-Ni ; Ti-V-Mn ; Zr-Mn-Fe ; Zr-V-Fe ; Zr-Ni-A-M et Zr-Co-A, où A indique un élément choisi parmi l'yttrium, le lanthane, les terres rares et leurs mélanges, et M indique un élément choisi parmi le cobalt, le cuivre, le fer, l'aluminium, l'étain, le titane, le silicium et leurs mélanges.

3. Matériaux composites selon la revendication 1, dans lesquels le degré de revêtement est compris entre 25 % et 75 % de la surface du matériau sorbeur non évaporable.

4. Matériaux composites selon la revendication 1, dans lesquels l'épaisseur dudit dépôt est inférieure à environ 5 µm.

5. Matériaux composites selon la revendication 1, dans lesquels les particules de poudre ont une taille inférieure à environ 500 µm.

6. Matériaux composites selon la revendication 5, dans lesquels la taille de particule des poudres est comprise entre environ 20 et 125 µm.

7. Dispositifs comprenant des matériaux composites (10 ; 20) de la revendication 1.

8. Dispositif selon la revendication 7, qui est sous la forme d'un récipient pour isolation thermique avec espace intermédiaire sous vide.

9. Dispositif selon la revendication 7, qui est sous la forme d'un tuyau thermiquement isolé avec espace intermédiaire sous vide.

10. Dispositif selon la revendication 7, qui est sous la forme d'une batterie du type rechargeable ou non rechargeable.
